# EUROPEAN PATENT APPLICATION

(11) **EP 2 541 876 A1**
(43) Date of publication of application: **02.01.2013**
(21) Application number: 12747172.0
(22) Date of filing: 06.02.2012
(51) Int. Cl.: H04L 29/10, H04L 12/56, H04N 7/173

(54) **TRANSMISSION TERMINAL AND TRANSMISSION METHOD**

(30) Priority: 16.02.2011 JP 2011030510
(71) Applicant: Sony Corporation, Tokyo 108-0075 (JP)
(72) Inventor: MASUDA, Yasuto, Tokyo 108-0075 (JP)
(74) Representative: Ealey, Douglas Ralph
(86) International application number: PCT/JP2012/052649
(87) International publication number: WO 2012/111470

(57) **Abstract**

To realize a state in which a decrease in throughput at one place does not affect other transmission destinations while preventing CPU load from becoming high.

The present technology can be applied to a multiple point distribution system that transmits a video stream to a plurality of transmission destinations by using a transport protocol having a congestion control mechanism, such as TCP. A transmission terminal transmits the video stream in the same thread (first thread) with respect to receiving terminals A and C in which throughput is sufficient, and transmits the video stream in another thread (second thread) with respect to a receiving terminal B in which throughput has decreased. As a result of adopting such a transmission method, a decrease in throughput for the receiving terminal B does not affect transmission to the receiving terminals A and C. Furthermore, transmission is not performed to the receiving terminals A, B, and C in mutually different threads, and an increase in the number of threads, thus, an increase in CPU load, can be suppressed.

## Description

### Technical Field

The present technology relates to a transmission terminal and a transmission method. More particularly, the present technology relates to a transmission terminal that transmits the same data, such as a video stream, to a plurality of transmission destinations by using a transport protocol having a congestion control mechanism, such as TCP (Transmission Control Protocol), and relates to a transmission method for use therewith.

### Background Art

A system has been considered in which a transmission terminal transmits the same data, such as a video stream, to a plurality of transmission destinations by using a transport protocol, such as TCP. In a case where data is to be transmitted in the same thread to all the transmission destinations, if there is even just one transmission destination in which the transmission process is blocked, the transmission processes for all the other transmission destinations are made to wait until the block is released. As a result, communication for all the transmission destinations, including those in which throughput is sufficient, may be delayed, and data may be lost.

Furthermore, in a case where a thread is generated for each of all the transmission destinations and data is to be transmitted, all the transmission processes are performed in parallel. Consequently, even if the transmission process for a certain transmission destination is blocked, this does not affect the other transmission destinations. However, since the number of threads to be generated increases, CPU load increases.

Furthermore, in a case where a transmission process is set to non-blocking, in the case where a transmission process is delayed, the transmission process is not blocked and an error occurs instantly. In this case, the processing is not delayed. However, a transmission destination in which throughput is sufficient also generates an error and this is unacceptable practically.

For example, PTL 1 discloses a technology that optimizes data to be sent, such as the quality of a video being changed in accordance with the computation performance of a receiving terminal and the band of a network.

### Citation List

### Patent Literature

PTL 1: Japanese Unexamined Patent Application Publication No. 2010-212942

### Summary of Invention

### Technical Problem

In the manner as described above, in a case where a transmission terminal transmits the same data, such as a video stream, to a plurality of transmission destinations by using a transport protocol, such as TCP, inconvenience, such as a decrease in throughput at one place affecting the other transmission destinations, or the load of the CPU becoming high, occurs.

The object of the present technology is to realize a state in which a decrease in throughput at one place does not affect the other transmission destinations while preventing the load of the CPU from becoming high.

### Solution to Problem

The concept of the present technology lies in a transmission terminal including:
a data transmission unit that transmits the same data to a plurality of transmission destinations by using a transport protocol having a congestion control mechanism,
wherein the data transmission unit
transmits the same data collectively in a first thread with respect to a transmission destination in which throughput is sufficient, and shifts a transmission destination in which the throughput has decreased and a transmission process has been blocked for a fixed time period or more to a state in which the same data is transmitted in a second thread different from the first thread.

In the present technology, the same data is transmitted to a plurality of transmission destinations by the data transmission unit. In this case, examples of transport protocols include transport protocols having a congestion control mechanism, for example, TCP (Transmission Control Protocol), STCP (Stream Control Transmission Protocol), and DCCP (Datagram Congestion Control Protocol). Furthermore, in this case, for the data, in addition to a video stream, other data such as files is considered. Here, the congestion control mechanism is a mechanism that controls the transfer speed in response to the state of the network. As a result of using a transport protocol, such as TCP, the band used is adjusted so that the other communication is not obstructed. However, instead, there is a case in which a necessary throughput cannot be acquired.

In the data transmission unit, data is collectively transmitted in a first thread to a transmission destination in which throughput is sufficient. However, data is transmitted in a second thread different from the first thread to a transmission destination in which throughput has decreased and the transmission process has been blocked for a fixed time period or more. Here, in a case where there are a plurality of transmission destinations in which throughput has decreased and the transmission process has been blocked for a fixed time period or more, the transmissions for the transmission destinations are performed in different threads, or the transmissions of all the transmission destinations are performed in one common thread.

As described above, in the present technology, data is collectively transmitted in a first thread to a transmission destination in which throughput is sufficient and data is transmitted in a second thread to a transmission destination in which throughput has decreased and the transmission process has been blocked for a fixed time period or more. For this reason, a state in which a decrease in throughput at one place does not affect the other transmission destinations can be realized. Furthermore, the present technology aims to shift only transmission destinations in which throughput has decreased and the transmission process has been blocked for a fixed time period or more to a state in which data is transmitted in a second thread. For this reason, it is possible to prevent CPU load from becoming high.

In the present technology, for example, when the throughput of the transmission destination to which data is transmitted in a second thread is restored to a sufficient state, the data transmission unit may return this transmission destination to a state in which data is transmitted in a first thread. By returning the transmission destination that has been restored to a state in which throughput is sufficient to a state in which data is transmitted in a first thread as described above, it becomes possible to return the increased number of threads to the original number, making it possible to reduce CPU load.

In this case, for example, when a state in which the transmission process for the transmission destination to which data is transmitted in a second thread has not been blocked for a fixed time period or more has continued for a predetermined number of times, the data transmission unit causes this transmission destination to return to a state in which data is transmitted in a first thread. Then, in this case, for example, the data transmission unit has a counter that counts up the times when the transmission process for the transmission destination to which data is transmitted in a second thread has not been blocked for a fixed time period or more, resets this counter when the transmission process has been blocked for a fixed time period or more, and determines whether or not a state in which the transmission process for the transmission destination in which data is transmitted in a second thread has not been blocked for a fixed time period or more has continued for a predetermined number of times on the basis of the count value of the counter.

Furthermore, in the present technology, for example, when the throughput of the transmission destination to which data is transmitted in a second thread has not been restored for a predetermined time period, the data transmission unit may disconnect this transmission destination. By disconnecting the transmission destination in which throughput has not been restored for a predetermined time period as described above, it becomes possible to reduce CPU load. In this case, for example, the data transmission unit has a counter that counts up the times when the transmission process for the transmission destination in which data is transmitted in a second thread has not been blocked for a fixed time period or more, resets the counter when this transmission process has been blocked for a fixed time period or more, and determines whether or not the throughput has not been restored for a predetermined time period on the basis of the number of reset times in a predetermined time period. Advantageous Effects of Invention

According to the present technology, it is possible to realize a state in which a decrease in throughput at one place does not affect the other transmission destinations while preventing CPU load from becoming high.

### Brief Description of Drawings

[Fig. 1] Fig. 1 is a block diagram illustrating an example of the configuration of a multiple point distribution system according to an embodiment of the present technology.
[Fig. 2] Fig. 2 is a block diagram illustrating an example of the configuration of a transmission terminal forming the multiple point distribution system.
[Fig. 3] Fig. 3 illustrates an example of a method of transmitting data to receiving terminals A, B, and C in the same thread.
[Fig. 4] Fig. 4 illustrates an example of a method of transmitting data to the receiving terminals A, B, and C in the same thread, and also illustrates an example of a case in which only the throughput for the receiving terminal B has decreased.
[Fig. 5] Fig. 5 illustrates an example of a method of transmitting data to the receiving terminals A, B, and C in different threads, and also illustrates an example of a case in which only the throughput for the receiving terminal B has decreased.
[Fig. 6] Fig. 6 illustrates a transmission method in the present technology.
[Fig. 7] Fig. 7 is a flowchart illustrating a transmission processing flow of the original thread (first thread).
[Fig. 8] Fig. 8 is a flowchart illustrating a transmission processing flow of another thread (second thread).

### Description of Embodiments

Hereinafter, modes for carrying out the invention (hereinafter referred to as embodiments) will be described. The description will be given in the following order.
1. Embodiment
2. Modification

### <1. Embodiment>

### [Multiple point distribution system]

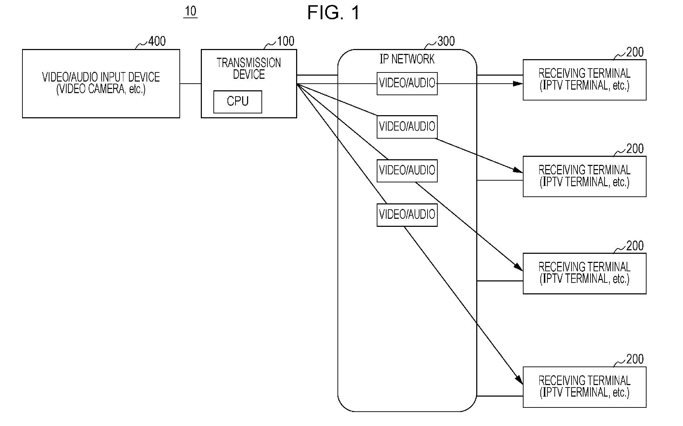

Fig. 1 illustrates an example of the configuration of a multiple point distribution system 10 according to an embodiment. The multiple point distribution system 10 is configured in such a way that a transmission terminal 100 and a plurality of receiving terminals 200 are connected to each other via an IP network 300. Here, the receiving terminals 200 form transmission destinations. Video audio input (video data, audio data) is supplied to the transmission terminal 100 from a video/audio input device 400, such as a video camera device. In the transmission terminal 100, a coding process and the like are performed on the video audio input, and a video stream including video data and audio data is generated. Then, in the transmission terminal 100, this video stream is sequentially transmitted to the plurality of receiving terminals 200 as transmission destinations for each data block by using TCP (Transmission Control Protocol).

Here, the transmission terminal 100 transmits data collectively in the first thread to a receiving terminal 200 in which throughput is sufficient. Furthermore, the transmission terminal 100 causes the receiving terminal 200 in which throughput has decreased and the transmission process has been blocked for a fixed time period or more to a state in which data is transmitted in a second thread different from the first thread. Furthermore, when the throughput of the receiving terminal 200 to which data is transmitted in the second thread is restored to a sufficient state, the transmission terminal 100 returns the receiver 200 to a state in which data is transmitted in the first thread. In addition, when the throughput of the receiving terminal 200 to which data is transmitted in the second thread has not been restored for a predetermined time period, the transmission terminal 100 disconnects the receiving terminal 200.

### [Configuration of transmission terminal]

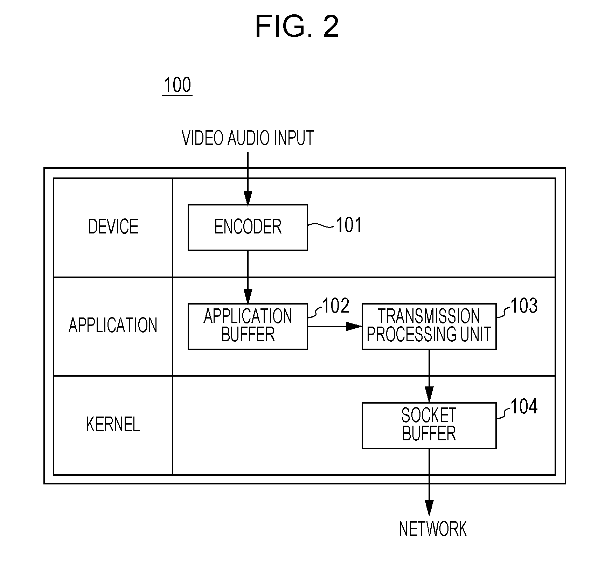

Fig. 2 illustrates an example of the configuration of the transmission terminal 100. The transmission terminal 100 includes an encoder 101 as a device. The encoder 101 performs a coding process and the like on video audio input (video data, audio data) from the video/audio input device 400 (see Fig. 1) so as to generate a video stream.

Furthermore, the transmission terminal 100 includes an application buffer 102 and a transmission processing unit 103 as applications. The application buffer 102 temporarily stores a transmission stream generated by the encoder 101. The transmission processing unit 103 transmits the transmission stream stored in the application buffer 102 to the plurality of receiving terminals 200 for each data block. Here, the application forms the data transmission unit.

Furthermore, the transmission terminal 100 includes a socket buffer 104 as a kernel. The socket buffer 104 temporarily stores a data block that is transmitted to each receiving terminal 200 by the transmission processing unit 103. The socket buffer 104 is a buffer used for passing data between an application layer and a TCP layer. The socket buffer 104 is allocated for each socket.

### [Transmission method used in transmission terminal]

Here, a transmission method used in the transmission terminal 100 will be described. In the data transmission using TCP, the transmission process is blocked until the socket buffer 104 has a vacancy. In a case where live distribution is being performed, while the transmission process is being blocked, new data continues to be generated in the encoder 101. For this reason, the data that is generated by the encoder 101 is temporarily stored in the application buffer 102 and thereafter is sequentially transmitted by the transmission processing unit 103.

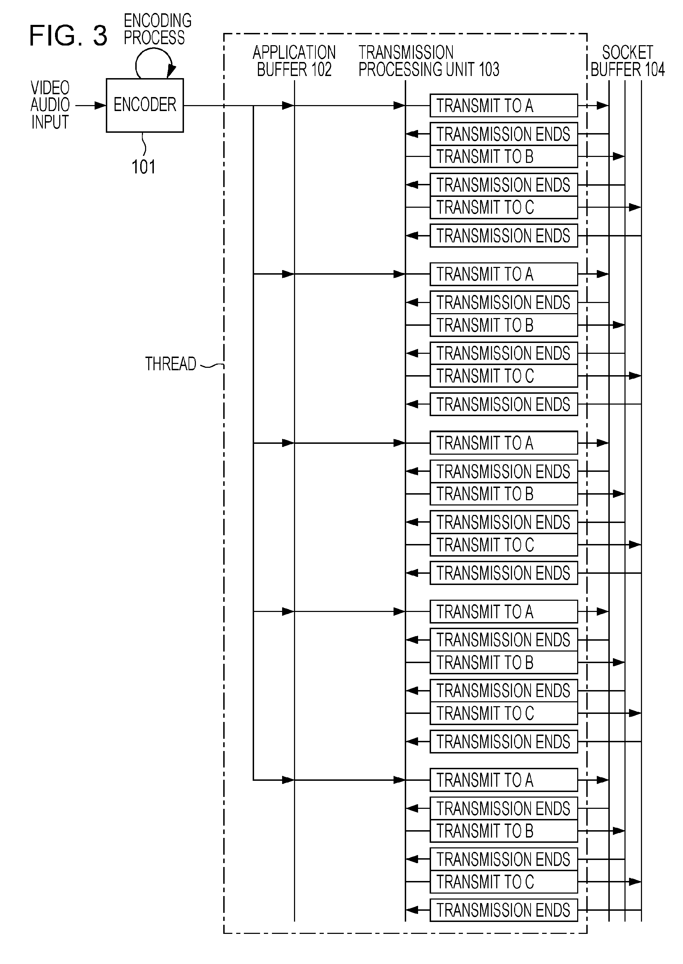

Initially, various transmission methods will be described. Fig. 3 illustrates an example in which data is transmitted to the plurality of receiving terminals 200, here, the receiving terminals A, B, and C, in the same thread. The video audio input is supplied to the encoder 101. In this encoder 101, an encoding process (coding process) is performed, and the encoded data forming a video stream is placed in the application buffer 102. The transmission processing unit 103 fetches data from the application buffer 102, and sequentially transmits the data to the receiving terminals A, B, and C.

In this case, the transmission processing unit 103 repeatedly and sequentially transmits data to the receiving terminals A, B, and C for each data block. In this case, since the throughput for each of the receiving terminals A, B, and C is sufficient, no problem is posed. For example, if a video stream of 10 Mbps is being sent to all the receiving terminals A, B, and C and all the throughputs for the receiving terminals A, B, and C exhibit network performance at 10 Mbps, even with the transmission method such as that shown in Fig. 3, data can be transmitted without problems.

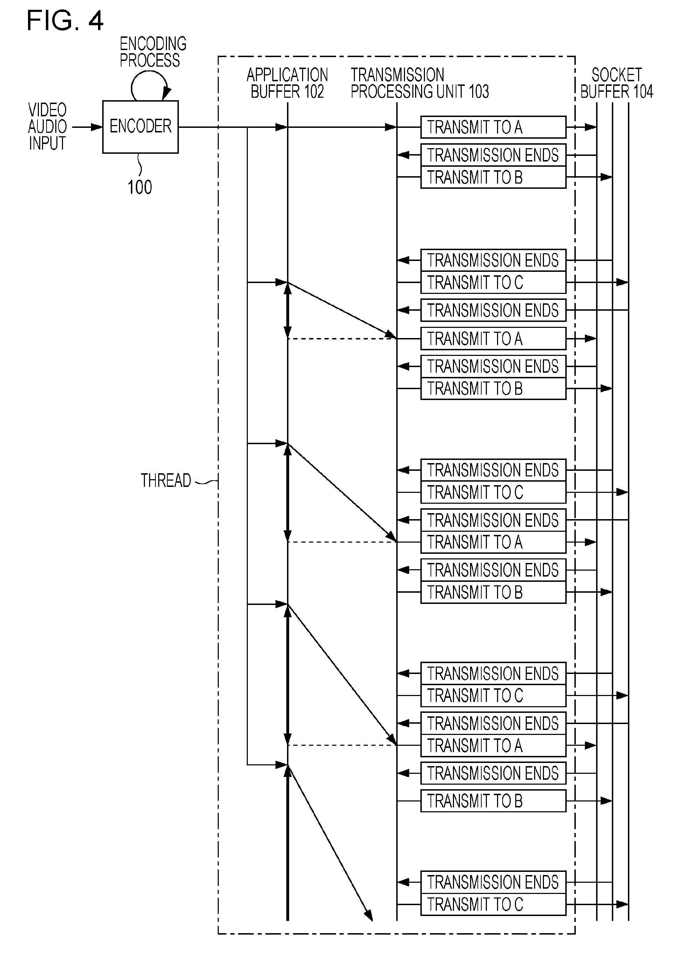

Fig. 4 shows an example in which, similarly to the example of Fig. 3, transmission is performed to the receiving terminals A, B, and C in the same thread, but only the throughput for the receiving terminal B has decreased. An example thereof is a case in which throughputs for the receiving terminals A and C exhibit network performance at 10 Mbps, but the throughput for the receiving terminal B is smaller than 10 Mbps due to a defect of the network state, or the like. The transmission processing unit 103 repeatedly and sequentially transmits data to the receiving terminals A, B, and C for each data block. Consequently, unsent data remains in the application buffer 102, and due to a decrease in the throughput for the receiving terminal B, transmission delay influences the transmission to the receiving terminals A and C.

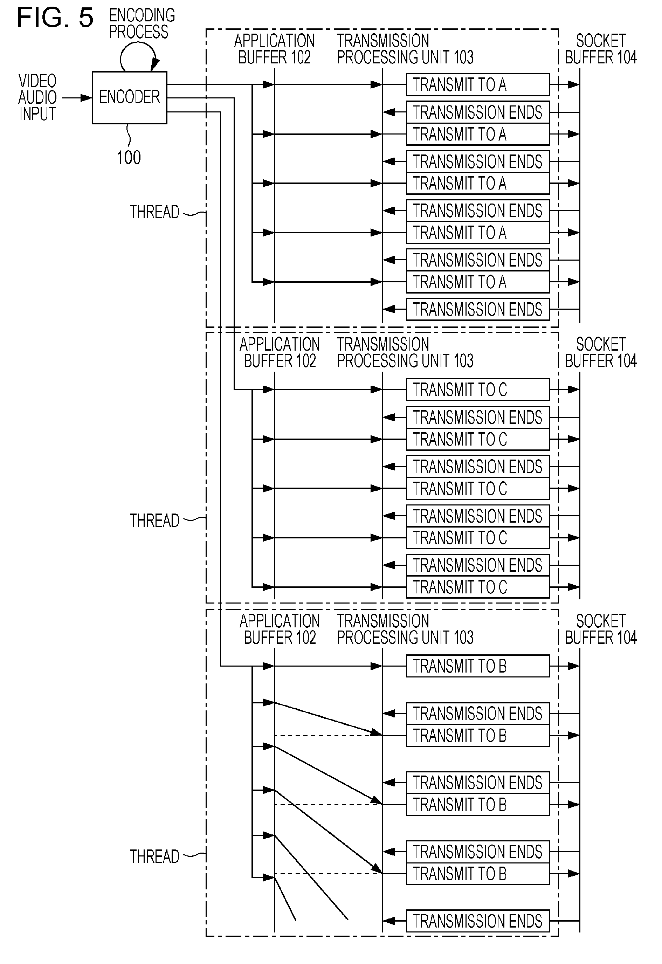

Fig. 5 is an example of a case in which data is transmitted to the receiving terminals A, B, and C in different threads, and only the throughput for the receiving terminal B has decreased. In this case, the transmission processing unit 103 and the application buffer 102 are prepared for each thread, and processing is performed in parallel. For this reason, a decrease in the throughput for the receiving terminal B does not affect the transmission to the receiving terminals A and C. However, in this example, since the number of threads increases, CPU load increases.

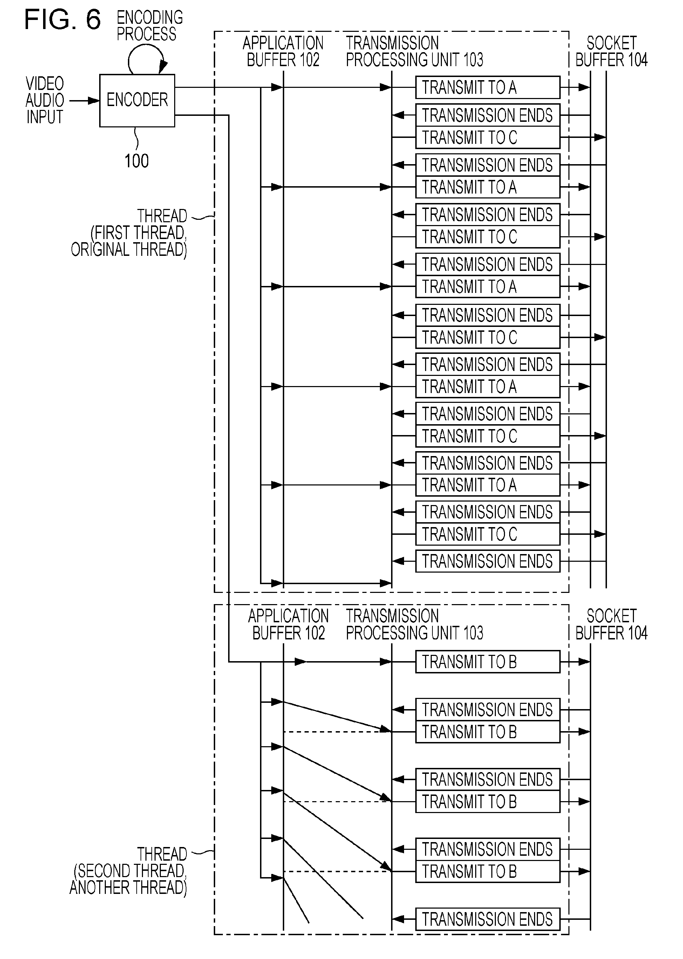

Fig. 6 shows an example of a transmission method in the embodiment. In this case, data is transmitted in the same thread (first thread) with respect to the receiving terminals A and C in which throughput is sufficient, and data is transmitted to the receiving terminal B in which throughput has decreased in another thread (second thread). As a result of adopting such a transmission method, the decrease in the throughput for the receiving terminal B does not affect the transmission to the receiving terminals A and C. Moreover, in this case, data is not transmitted in mutually different threads to the receiving terminals A, B, and C. Thus, when compared to the transmission method of Fig. 5, an increase in the number of threads, therefore, an increase in CPU load, can be suppressed.

### [Thread movement process]

Next, a thread movement process will be described. In the transmission method in the embodiment, which receiving terminal (transmission destination) is to be processed in another thread is dynamically controlled. Specifically, the original thread (first thread) monitors the time taken for the transmission process. If the time has taken for a fixed time period or more, the original thread determines that the throughput has decreased, and proceeds the process to another thread (second thread). Furthermore, in a case where the process proceeds to another thread, if the throughput is restored, the process is returned to the original thread. However, if the throughput is not restored for a fixed time period or more, a disconnection is made by assuming the throughput to be non-restorable.

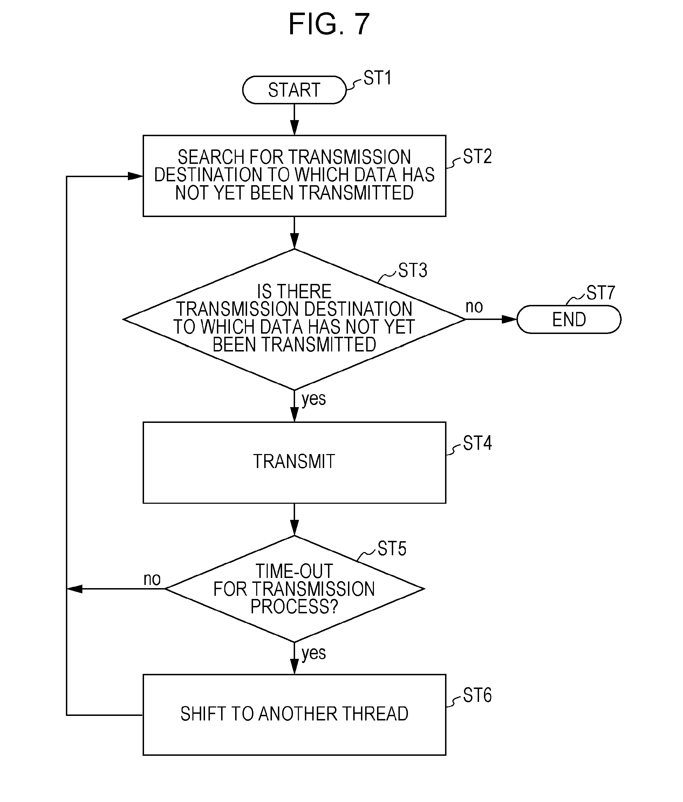

The flowchart of Fig. 7 shows a transmission processing flow of the original thread (first thread). The original thread repeats the processing in accordance with this transmission processing flow for each data block. The original thread performs transmission processes for a plurality of receivers 200. A time-out time is provided for the transmission processes, and the transmission to the receiver 200 in which the time-out time has been exceeded is shifted to another thread (second thread).

That is, the original thread starts processing in step ST1, and thereafter the process proceeds to the process of step ST2. The original thread searches for a transmission destination to which data has not yet been sent in step ST2. Then, the original thread determines whether or not there is a transmission destination to which data has not yet been sent in step ST3. When there is no transmission destination to which data has not yet been sent, the original thread ends the processing in step ST7. On the other hand, when there is a transmission destination to which data has not yet been sent, the original thread performs a transmission process for the transmission destination in step ST4. Then, in step ST5, the original thread determines whether or not the transmission processing time period has exceeded a time-out time (for example, 0.2 to 0.3 seconds).

When the transmission processing time period has not exceeded the time-out time, the original thread immediately returns to the process of step ST2. On the other hand, when the transmission processing time period has exceeded the time-out time, in step ST6, the original thread shifts the transmission process for the transmission destination to another thread, and thereafter returns to the process of step ST2. That is, the transmission destination in which throughput has decreased and the transmission process has been blocked for a fixed time period or more is shifted to a state in which data is transmitted in another thread.

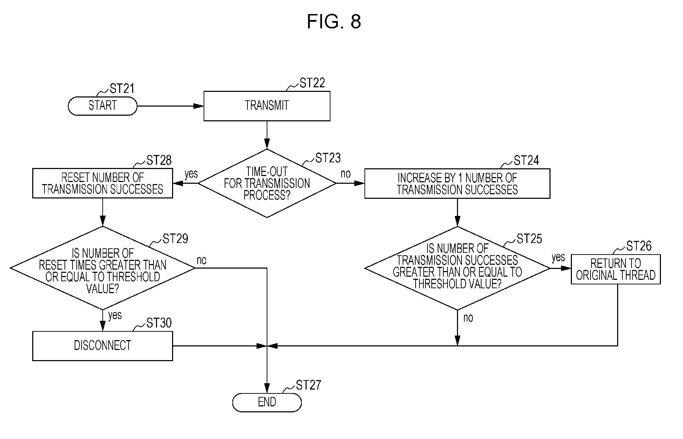

The flowchart of Fig. 8 shows a transmission processing flow of another thread (second thread). The other thread repeats the processing in accordance with this transmission processing flow for each data block. The other thread performs a transmission process, and increases the number of transmission successes by 1 when a time-out does not occur and the processing has succeeded. The other thread returns the process to the original thread when the number of transmission successes exceeds a fixed number of times, and the processing is completed. When a time-out occurs, the other thread resets the number of transmission successes. When the number of reset times for a past predetermined time period exceeds a fixed number of times (threshold value), the other thread assumes that the throughput is non-recoverable, and makes a disconnection.

That is, in step ST21, the other thread starts the processing, and thereafter proceeds to the process of step ST22. In step ST22, the other thread performs a transmission process. Then, in step ST23, the other thread determines whether or not the transmission processing time period has exceeded the time-out time (for example, 0.2 to 0.3 seconds). When the transmission processing time period has not exceeded the time-out time, in step ST24, the other thread increases the number of transmission successes by 1. In this case, a counter in the CPU, which counts the number of transmission successes, is incremented.

Next, in step ST25, the other thread determines whether or not the number of transmission successes is greater than or equal to a threshold value on the basis of the count value of the counter. This threshold value is set at a value corresponding to, for example, approximately several seconds or minutes. When the number of transmission successes is not greater than or equal to the threshold value, the other thread immediately ends the processing in step ST27. On the other hand, when the number of transmission successes is greater than or equal to the threshold value, in step ST26, the other thread returns the processing to the original thread (first thread) with respect to the relevant transmission destination, and thereafter ends the processing in step ST27. That is, when the throughput of the transmission destination to which data is transmitted in the other thread restores to a sufficient state, the other thread returns this transmission destination to a state in which data is transmitted in the original thread.

Furthermore, when the transmission processing time period has exceeded the time-out time in step ST23, the other thread resets the number of transmission successes in step ST28. In this case, the counter that counts the number of transmission successes is reset. Then, in step ST29, the other thread determines, for example, whether or not the number of reset times for a past predetermined time period, for example, past 30 seconds, is greater than or equal to a threshold value. When the number of reset times is not greater than or equal to the threshold value, the other thread immediately ends the processing in step ST27.

On the other hand, when the number of reset times is greater than or equal to the threshold value, in step ST30, the other thread disconnects the relevant transmission destination, and thereafter ends the processing in step ST27. That is, when the throughput of the transmission destination, to which data is transmitted in the other thread, is not restored for a predetermined time period or more, the other thread disconnects the transmission destination.

In the multiple point distribution system 10 shown in Fig. 1, in the transmission terminal 100, data is collectively transmitted in the first thread with respect to the receiver 200 in which throughput is sufficient. Furthermore, in the transmission terminal 100, data is transmitted in the second thread with respect to the receiver 200 in which throughput has decreased and the transmission process has been blocked for a fixed time period or more. For this reason, a state in which throughput at one place does not affect the other receivers 200 can be realized. Furthermore, in the transmission terminal 100, only the receiver 200 in which throughput has decreased and the transmission process has been blocked for a fixed time period or more is made to shift to a state in which data is transmitted in the second thread. For this reason, it is possible to prevent CPU load from becoming high. As a result, processing other than the data distribution will not be affected.

Furthermore, in the multiple point distribution system 10 shown in Fig. 1, in the transmission terminal 100, when the throughput of the receiver 200, to which data is transmitted in the second thread, is restored to a sufficient state, the receiver 20 is returned to a state in which data is transmitted in the first thread. As a result, the number of threads can be decreased, for example, from 2 to 1, making it possible to reduce CPU load.

Furthermore, in the multiple point distribution system 10 shown in Fig. 1, in the transmission terminal 100, when the throughput of the receiver 200, to which data is transmitted in the second thread, has not been restored for a predetermined time period, this receiver 200 is disconnected. As a result, reduction in the CPU load becomes possible.

### <2. Modification>

Meanwhile, in the above-described embodiment, in this transmission terminal 100, data is transmitted in a second thread (another thread) with respect to the receiver 200 in which throughput has decreased and the transmission process has been blocked for a fixed time period or more. Here, a case in which a plurality of such receivers 200 exist is considered. In that case, the transmission for each receiver 200 may be performed in different threads, or the transmission for all the receivers 200 may be performed in one common thread. Meanwhile, in a case where the transmission for each receiver 200 is performed in different threads, the number of second threads becomes plural, and CPU load increases.

Furthermore, in the above-described embodiment, the transmission terminal 100 performs transmission by using TCP. However, the usable transport protocol is not limited to TCP. For example, the transport protocol may be STCP (Stream Control Transmission Protocol) or DCCP (Datagram Congestion Control Protocol), each of which has a congestion control mechanism in the same way as TCP. Furthermore, in the above-described embodiment, the transmission terminal 100 transmits a video stream containing video data and audio data to a plurality of receiving terminals 200. Also in a case where the other data, such as files, is to be transmitted, the present technology can be applied in the same way.

### Industrial Applicability

The present technology can be applied to, for example, a multiple point distribution system that transmits a video stream to a plurality of transmission destinations by using a transport protocol having a congestion control mechanism, such as TCP.

### Reference Signs List.

- 10 ···: multiple point distribution system
- 100 ···: transmission terminal
- 101 ···: encoder
- 102 ···: application buffer
- 103 ···: transmission processing unit
- 104 ···: socket buffer
- 200 ···: receiving terminal
- 300 ···: IP network
- 400 ···: video/audio input device

## Claims

1. A transmission terminal comprising:
a data transmission unit that transmits the same data to a plurality of transmission destinations by using a transport protocol having a congestion control mechanism,
wherein the data transmission unit
transmits the same data collectively in a first thread with respect to a transmission destination in which throughput is sufficient, and shifts a transmission destination in which the throughput has decreased and a transmission process has been blocked for a fixed time period or more to a state in which the same data is transmitted in a second thread different from the first thread.

2. The transmission terminal according to Claim 1, wherein the data transmission unit
returns, when the throughput of a transmission destination, to which the same data is transmitted in the second thread, has been restored to a sufficient state,
the transmission destination to a state in which the same data is transmitted in the first thread.

3. The transmission terminal according to Claim 2, wherein the data transmission unit
returns, when a state in which the transmission process for a transmission destination to which the same data is transmitted in the second thread has not been blocked for the fixed time period or more has continued for a predetermined number of times, the transmission destination to a state in which the same data is transmitted in the first thread.

4. The transmission terminal according to Claim 3, wherein the data transmission unit
has a counter that counts up the times when the transmission process for a transmission destination to which the same data is transmitted in the second thread has not been blocked for the fixed time period or more, resets the counter when the transmission process has been blocked for the fixed time period or more, and determines whether or not a state in which the transmission process for the transmission destination to which the same data is transmitted in the second thread has not been blocked for the fixed time period or more has continued for a predetermined number of times on the basis of the count value of the counter.

5. The transmission terminal according to Claim 2, wherein the data transmission unit disconnects, when the throughput of a transmission destination to which the same data is transmitted in the second thread has not been restored for a predetermined time period, the transmission destination.

6. The transmission terminal according to Claim 5, wherein the data transmission unit
has a counter that counts up the times when the transmission process for the transmission destination to which the same data is transmitted in the second thread has not been blocked for the fixed time period or more, resets the counter when the transmission process has been blocked for the fixed time period or more, and determines whether or not the throughput has not been restored for a predetermined time period on the basis of the number of reset times in the predetermined time period.

7. The transmission terminal according to Claim 1, wherein the data is a video stream.

8. The transmission terminal according to Claim 1, wherein the transport protocol having the congestion control mechanism is TCP.

9. A transmission method comprising:
when the same data is to be transmitted to a plurality of transmission destinations by using a transport protocol having a congestion control mechanism,
collectively transmitting the same data in a first thread with respect to a transmission destination in which throughput is sufficient; and
shifting a transmission destination in which the throughput has decreased and a transmission process has been blocked for a fixed time period or more to a state in which the data is transmitted in a second thread different from the first thread.
